# EUROPÄISCHE PATENTSCHRIFT

(11) **EP 1 370 751 B1**
(45) Veröffentlichungstag und Bekanntmachung des Hinweises auf die Patenterteilung: **19.07.2006**
(21) Anmeldenummer: 02714069.8
(22) Anmeldetag: 26.02.2002
(51) Int. Cl.: F01N 11/00, F02D 41/22

(54) **VERFAHREN UND VORRICHTUNG ZUR ÜBERWACHUNG EINES SIGNALS**
METHOD AND DEVICE FOR MONITORING A SIGNAL
PROCEDE ET DISPOSITIF DE SURVEILLANCE D'UN SIGNAL

(30) Priorität: 14.03.2001 DE 10112138
(43) Veröffentlichungstag der Anmeldung: 17.12.2003
(73) Patentinhaber: ROBERT BOSCH GMBH, 70442 Stuttgart (DE)
(72) Erfinder: STROHMAIER, Rainer, 70563 Stuttgart (DE); PLOTE, Holger, 4017 Linz (AT); KRAUTTER, Andreas, 71711 Steinheim (DE); ZIMMERMANN, Stefan, 76327 Pfinztal (DE); WALTER, Michael, 70806 Kornwestheim (DE); SOJKA, Juergen, 70839 Gerlingen (DE)
(86) Internationale Anmeldenummer: PCT/DE2002/000704
(87) Internationale Veröffentlichungsnummer: WO 2002/073011

(56) Entgegenhaltungen:
- EP-A- 0 383 187
- WO-A-99/34187
- DE-C- 4 131 401
- US-A- 5 822 977

## Beschreibung

### Stand der Technik

Die Erfindung betrifft ein Verfahren und eine Vorrichtung zur Überwachung eines Signals.

Um die verschärften Emissionsgrenzwerte einhalten zu können, ist insbesondere bei Dieselbrennkraftmaschinen bekannt, dass Partikelfilter eingesetzt werden. In einem Partikelfilter sammeln sich während des Motorbetriebs Partikel an. Die im Partikelfilter abgelagerte Partikelmenge erhöht den Staudruck und kann mit einem Differenzdrucksensor oder mit zwei Absolutdrucksensoren gemessen werden. Wird eine vorgegebene Differenzdruckschwelle überschritten, so wird der Partikelfilter regeneriert.

Während des Motorbetriebs können sich aufgrund von Ablagerungen von Partikeln, von Sulfaten und Rost, und/oder von Undichtigkeiten im System Fehlmessungen bei der Druckmessungen auftreten. Dadurch kann der Fall eintreten, dass der Beladungszustand des Partikelfilters nicht mehr sicher erkannt wird. Dies kann zum einen dazu führen, dass eine, notwendige Regeneration des Partikelfilters nicht oder zu spät durchgeführt wird, oder dass die Regeneration zu häufig durchgeführt wird. Dies kann zu einer Beschädigung des Abgasnachbehandlungssystems und/oder zu einem erhöhten Kraftstoffverbrauch führen.

Gemäß einer Ausführungsform der Erfindung wurde erkannt, dass, ausgehend von auftretenden Schwingungen im Sensorsignal, Fehler im Bereic der Signalerfassung und/oder Fehler im Bereich des Abgasnachbehandlungssystems sicher erkannt werden können. Vorgesehen ist die Überwachung eines Drucksignals, das den Druck am Eingang und Ausgang und/oder die Druckdifferenz zwischen Eingang und Ausgang des Abgasnachbehandlungssystems charakterisiert. Ausgehend von auftretenden Schwingungen im Drucksignal wird in einer Steuereinheit auf Fehler im Abgasnachbehandlungssystem und/oder in wenigstens einer Zuleitungen zum Sensor erkannt.

Gemäß einer Ausgestaltung wird auf Fehler erkannt, wenn die Größe, welche die Schwingungsamplitude des Signals charakterisiert, außerhalb eines zulässigen Bereichs liegt. Erfindungsgemäß wurde erkannt, dass bestimmte Signale Pulsationen aufweisen, die durch das Öffnen und Schließen der Auslassventile verursacht werden. Von einem fehlerfreien System werden diese Pulsationen abgeschwächt. Weisen diese Pulsationen eine zu große Amplitude auf, so deutet dies auf einen Fehler hin, welche die Dämpfung der Pulsationen abschwächt. Dies kann beispielsweise durch einen gebrochenen Filter verursacht sein. Weisen die Pulsationen eine zu kleine Amplitude auf, so deutet dies auf einen Fehler hin, der die Pulsationen verstärkt dämpft. Dies kann beispielsweise durch Ablagerungen in den Abgasleitungen verursacht sein.

Gemäß einer Ausgestaltung wird auf Fehler erkannt, wenn das Signal zu große oder zu kleine Pulsationen aufweist. Ist die Größe, welche die Schwingungsamplitude des Signals charakterisiert, kleiner als ein Schwellenwert, so liegt ein Fehler vor, der eine starke Bekämpfung des Signals bewirkt. Dies kann beispielsweise durch Ablagerungen in den Zuleitungen zum Sensor verursacht werden.

Besonders vorteilhaft ist es, wenn der Schwellenwert abhängig vom Betriebszustand der Brennkraftmaschine und/oder des Abgasnachbehandlungssystems vorgebbar ist. Dadurch kann berücksichtigt werden, dass in unterschiedlichen Betriebszuständen unterschiedlich starke Pulsationen auftreten.

Die Größe, welche die Schwingungsamplitude des Signals charakterisiert, wird vorzugsweise ausgehend von der Differenz zwischen dem Signal und dem gemittelten Signal bestimmt. Dabei wird insbesondere der gemittelte Betrag der Differenz zwischen dem Signal und dem gemittelten Signal als Größe verwendet.

Gemäß einer anderen Ausgestaltung des erfindungsgemäßen Verfahrens ist vorgesehen, dass, ausgehend vom zeitlichen Verhalten des Drucksignals und einer den Abgasmassenstrom oder Abgasvolumenstrom charktensierenden Größe, in einer Steuereinheit auf Fehler erkannt wird So können verschiedene Fehler, wie eine Unterbrechung und/oder eine Verstopfung der Leitung zu einem Differenzdrucksensor sicher erkannt werden.

Solche Fehler werden vorzugsweise erkannt, wenn die Änderung der Druckdifferenz und die Änderung der den Abgasmassenstrom charakterisierenden Größe unplausible Werte annehmen.

Eine Versottung bzw. eine Verstopfung der Zuleitungen zu dem Sensor werden erkannt, wenn sich bei einer kleinen Änderung des Abgasmassenstroms die Druckdifferenz zu stark ändert. Insbesondere wird dieser Fehler erkannt, wenn bei einem kleinen Anstieg des Abgasmassenstroms die Druckdifferenz um mehr als ein Schwellenwert ansteigt.

Ferner wird dieser Fehler erkannt, wenn bei einer starken Änderung des Abgasmassenstroms die Druckdifferenz zu wenig ändert. Dieser Fehler wird vorzugsweise erkannt, wenn bei einem deutlichen Abfall des Abgasmassenstroms um mehr als einen Schwellenwert die Druckdifferenz sich zu wenig ändert, das heißt, wenn der Betrag der Änderung der Druckdifferenz kleiner ist als ein Schwellenwert.

Eine Unterbrechung der Zuleitung wird insbesondere erkannt, wenn über einen ersten Zeitraum ein zu kleiner Differenzdruck anliegt. Dies bedeutet, dass der Betrag der Druckdifferenz kleiner ist als ein Schwellenwert.

Ferner wird dieser Fehler erkannt, wenn bei einem starken Abfall des Abgasmassenstroms für einen zweiten Zeitraum ein zu kleiner Differenzdruck anliegt. Dies bedeutet, wenn kurzzeitig der Differenzdruck einen zu kleinen Wert annimmt und gleichzeitig der Abgasmassenstroms um mehr als einen Schwellenwert abfällt.

Vorteilhafte und zweckmäßige Ausgestaltungen und Weiterbildungen der Erfindung sind in den Unteransprüchen gekennzeichnet.

### Zeichnung

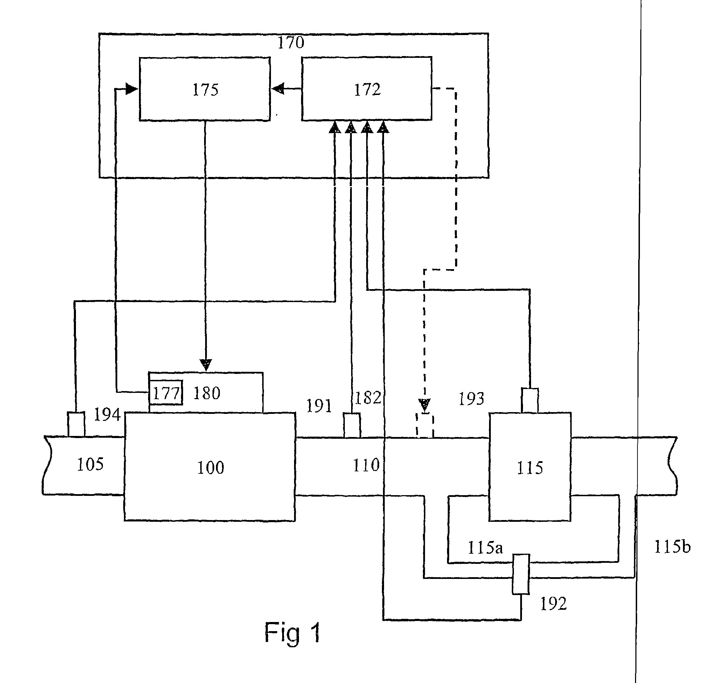

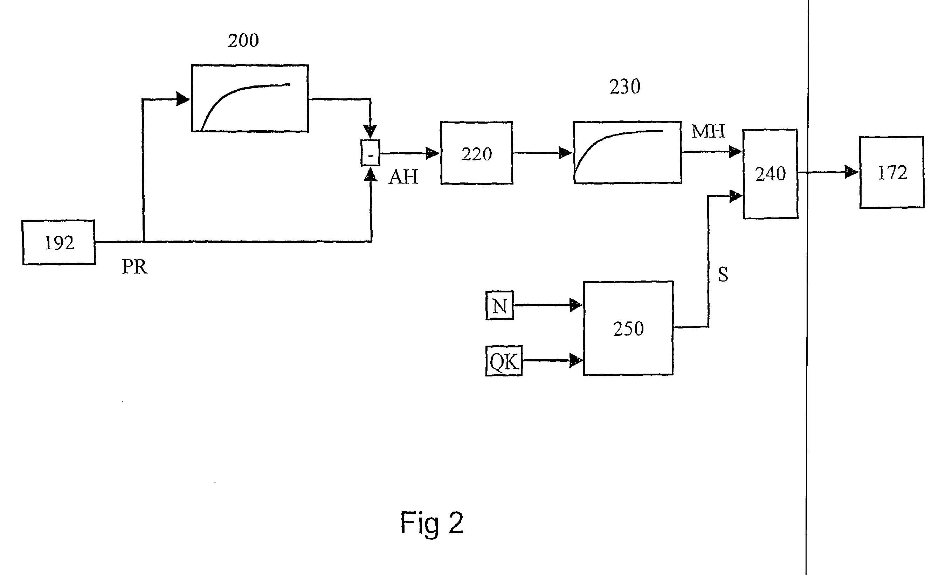

Die Erfindung wird nachstehend anhand der in der Zeichnung dargestellten Ausführungsform erläutert. Es zeigen Figur 1 ein Blockdiagramm eines Abgasnachbehandlungssystems und Figur 2 ein Blockdiagramm des Auswerteverfahrens zur Fehlererkennung.

### Beschreibung der Ausführungsbeispiele

In Figur 1 sind die wesentlichen Elemente eines Abgasnachbehandlungssystems einer Brennkraftmaschine dargestellt. Die Brennkraftmaschine ist mit 100 bezeichnet. Ihr wird über eine Frischluftleitung 105 Frischluft zugeführt. Die Abgase der Brennkraftmaschine 100 gelangen über eine Abgasleitung 110 in die Umgebung. In der Abgasleitung ist ein Abgasnachbehandlungssystem 115 angeordnet. Hierbei kann es sich um einen Katalysator und/oder um einen Partikelfilter handeln. Desweiteren ist es möglich, dass mehrere Katalysatoren für unterschiedliche Schadstoffe oder Kombinationen von wenigstens einem Katalysator und einem Partikelfilter vorgesehen sind.

Desweiteren ist eine Steuereinheit 170 vorgesehen, die wenigstens eine Motorsteuereinheit 175 und eine Abgasnachbehandlungssteuereinheit 172 umfaßt. Die Motorsteuereinheit 175 beaufschlagt ein Kraftstoffzumesssystem 180 mit Ansteuersignalen. Die Abgasnachbehandlungssteuereinheit 172 beaufschlagt die Motorsteuereinheit 175 und bei einer Ausgestaltung ein Stellelement 182, das in der Abgasleitung vor dem Abgasnachbehandlungssystem oder im Abgasnachbehandlungssystem angeordnet ist, mit Ansteuersignalen.

Desweiteren können verschiedene Sensoren vorgesehen sein, die die Abgasnachbehandlungssteuereinheit und die Motorsteuereinheit mit Signalen versorgen. So ist wenigsten ein erster Sensor 194 vorgesehen, der Signale liefert, die den Zustand der Luft charakterisieren, die der Brennkraftmaschine zugeführt wird. Ein zweiter Sensor 177 liefert Signale, die den Zustand des Kraftstoffzumesssystems 180 charakterisieren. Wenigsten ein dritter Sensor 191 liefert Signale, die den Zustand des Abgases vor dem Abgasnachbehandlungssystem charakterisieren. Wenigsten ein vierter Sensor 193 liefert Signale, die den Zustand des Abgasnachbehandlungssystems 115 charakterisieren.

Am Abgasnachbehandlungssystem sind zwei Druckentnahmestellen vor und nach dem Filter angebracht, die über Zuleitungen 115a und 115b mit einem Differenzdrucksensor 192 verbunden sind. Die Druckdifferenz wird mittels eines Differenzdrucksensors oder zweier Absolutdrucksensoren gemessen. Dieser Sensor 192 liefert Signale, die den Zustand der Abgase nach dem Abgasnachbehandlungssystem charakterisieren.

Ferner können noch Sensoren eingesetzt werden, die Temperaturwerte und/oder Druckwerte erfassen. Desweiteren können auch Sensoren eingesetzt werden, die die chemische Zusammensetzungen des Abgases und/oder der Frischluft charakterisieren. Hierbei handelt es sich bspw. um Lambdasensoren, NOX-Sensoren oder HC-Sensoren.

Mit den Ausgangssignalen des ersten Sensors 194, des dritten Sensors 191, des vierten Sensors 193 und des fünften Sensors 192 wird vorzugsweise die Abgasnachbehandlungssteuereinheit 172 beaufschlagt. Mit den Ausgangssignalen des zweiten Sensors 177 wird vorzugsweise die Motorsteuereinheit 175 beaufschlagt. Es können auch weitere nicht dargestellte Sensoren vorgesehen sein, die ein Signal bezüglich des Fahrerwunsches oder weitere Umgebungs- oder Motorbetriebszustände charakterisieren.

Besonders vorteilhaft ist es, wenn die Motorsteuereinheit und die Abgasnachbehandlungssteuereinheit eine bauliche Einheit bilden. Es kann aber auch vorgesehen sein, dass diese als zwei Steuereinheiten ausgebildet sind, die räumlich voneinander getrennt sind.

Im folgenden wird die erfindungsgemäße Vorgehensweise am Beispiel eines Partikelfilters, der insbesondere bei direkteinspritzenden Brennkraftmaschinen verwendet wird, beschrieben. Die erfindungsgemäße Vorgehensweise ist aber nicht auf diese Anwendung beschränkt, sie kann auch bei anderen Brennkraftmaschinen mit einem Abgasnachbehandlungssystem eingesetzt werden. Insbesondere kann sie eingesetzt werden, bei Abgasnachbehandlungssystemen, bei denen ein Katalysator und ein Partikelfilter kombiniert sind. Desweiteren ist sie einsetzbar, bei Systemen die lediglich mit einem Katalysator ausgestattet sind.

Ausgehend von den vorliegenden Sensorsignalen berechnet die Motorsteuerung 175 Ansteuersignale zur Beaufschlagung des Kraftstoffzumesssystems 180. Dieses mißt dann die entsprechende Kraftstoffmenge der Brennkraftmaschine 100 zu. Bei der Verbrennung können im Abgas Partikel entstehen. Diese werden von dem Partikelfilter im Abgasnachbehandlungssystem 115 aufgenommen. Im Laufe des Betriebs sammeln sich in dem Partikelfilter 115 entsprechende Mengen von Partikeln an. Dies führt zu einer Beeinträchtigung der Funktionsweise des Partikelfilters und/oder der Brennkraftmaschine. Deshalb ist vorgesehen, dass in bestimmten Abständen bzw. wenn der Partikelfilter einen bestimmten Beladungszustand erreicht hat, ein Regenerationsvorgang eingeleitet wird. Diese Regeneration kann auch als Sonderbetrieb bezeichnet werden.

Der Beladungszustand wird bspw. anhand verschiedener Sensorsignale erkannt. So kann zum einen der Differenzdruck zwischen dem Eingang und dem Ausgang des Partikelfilters 115 ausgewertet werden. Zum anderen ist es möglich den Beladungszustand ausgehend von verschiedenen Temperatur- und/oder verschiedenen Druckwerten zu ermitteln. Desweiteren können noch weitere Größen zur Berechnung oder Simulation des Beladungszustands herangezogen werden. Eine entsprechende Vorgehensweise ist bspw. aus der DE 199 06 287 bekannt.

Erkennt die Abgasnachbehandlungssteuereinheit, dass der Partikelfilter einen bestimmten Beladungszustand erreicht hat, so wird die Regeneration initialisiert. Zur Regeneration des Partikelfilters stehen verschiedene Möglichkeiten zur Verfügung. So kann zum einen vorgesehen sein, dass bestimmte Stoffe über das Stellelement 182 dem Abgas zugeführt werden, die dann eine entsprechende Reaktion im Abgasnachbehandlungssystem 115 hervorrufen. Diese zusätzlich zugemessenen Stoffe bewirken unter anderem eine Temperaturerhöhung und/oder eine Oxidation der Partikel im Partikelfilter. So kann bspw. vorgesehen sein, dass mittels des Stellelements 182 Kraftstoffstoff und/oder Oxidationsmittel zugeführt werden.

Üblicherweise ist vorgesehen, dass der Beladungszustand ausgehend von verschiedenen Größen bestimmt wird. Durch Vergleich mit einem Schwellwert werden die unterschiedlichen Zustände erkannt und abhängig vom erkannten Beladungszustand die Regeneration eingeleitet.

Bei solchen Abgasnachbehandlungssystemen treten bei verschiedenen Signalen, die insbesondere von Sensoren im Bereich des Abgasnachbehandlungssystems erfasst werden, Schwingungen auf, die auch als Pulsationen bezeichnet werden. Diese Pulsationen werden durch die Druckänderungen des Abgases beim Öffnen und/oder Schließen der Auslassventile der einzelnen Zylinder verursacht. Diese Pulsationen sind mit der Nockenwellenfrequenz korreliert. Durch Ablagerungen in den Druckzuleitungen zwischen den Abgasleitungen 110 und den Sensoren wird die Amplitude der Pulsationen gedämpft.

Erfindungsgemäß wurde erkannt, dass aus der Amplitude der Schwingungen der Signale, insbesondere des Drucksignals auf den Zustand der Zuleitungen geschlossen werden kann. Vorzugsweise können Ablagerungen und Undichtigkeiten der Leitungen erkannt werden. Neben Fehlern im Bereich des Sensors oder in den Leitungen zu dem Sensor können auch Fehler im Bereich des Abgassystems, insbesondere des Abgasnachbehandlungssystems 115 und der Abgasleitung 110 erkannt werden.

Im Folgenden wird die erfindungsgemäße Vorgehensweise am Beispiel des Differenzdrucksensors 192 beschrieben. Die erfindungsgemäße Vorgehensweise ist dabei nicht auf diese Anwendung beschränkt, sie kann auch bei anderen Sensoren, die im Abgasnachbehandlungssystem bzw. in der Abgasleitung angeordnet sind, verwendet werden.

Am Abgasnachbehandlungssystem sind zwei Druckentnahmestellen vor und nach dem Filter angebracht, die über Zuleitungen 115a und 115b mit einem Differenzdrucksensor 192 verbunden sind. Die Druckdifferenz wird mittels eines Differenzdrucksensors oder zweier Absolutdrucksensoren gemessen. Zur Erfassung der Pulsationen wird das Drucksignal in einem festen Zeitraster abgetastet. Vorzugsweise wird das Signal im 1-Millisekunden-Raster abgetastet. Aus dem Rohsignal PR wird mittels eines Tiefpassfilters der zeitliche Mittelwert gebildet und von dem Rohsignal subtrahiert. Dadurch wird die absolute Höhe AH der Pulsationen bestimmt. Anschließend wird durch Bildung des Betrages und einer erneuten Tiefpassfilterung der zeitliche Mittelwert der Pulsationshöhe MH bestimmt. Dieser Wert wird mit einem Schwellenwert S verglichen, der vorzugsweise abhängig vom Betriebszustand der Brennkraftmaschine vorgebbar ist. Insbesondere wird der Schwellenwert abhängig von der Drehzahl und/oder der eingespritzten Kraftstoffmenge der Brennkraftmaschine vorgegeben. Wird dieser Schwellenwert unterschritten, so wird auf einen Fehler in den Druckzuleitungen geschlossen.

Das Signal PR des Sensors 192 gelangt zum einen zu einer Mittelwertbildung 200 und zum anderen zu einem Verknüpfungspunkt 210. Am zweiten Eingang des Verknüpfungspunktes 210 liegt das Ausgangssignal der Mittelwertbildung 200 an. Der Verknüpfungspunkt 210 beaufschlagt eine Betragsbildung 220 mit der Größe AH, die die absolute Höhe der Pulsationen des Signales PR charakterisiert. Mit dem Ausgangssignal des Betragsbildners 220 wird ein Tiefpass 230 beaufschlagt, der ein Signal MH an einen Vergleicher 240 liefert. Am zweiten Eingang des Vergleichers liegt ein Schwellenwert S einer Schwellenwertvorgabe 230 an, die mit verschiedenen Betriebskenngrößen wie der Drehzahl N und der eingespritzten Kraftstoffmenge QK beaufschlagt wird.

Der Verknüpfungspunkt 210 berechnet die Differenz zwischen dem Mittelwert des Rohsignals PR und dem Rohsignal PR. Dadurch ergibt sich die absolute Höhe der Pulsationen. Durch Betragsbildung 220 und eine anschließende Mittelwertbildung ergibt sich ein zeitlicher Mittelwert der Pulsationen MH. Diese Größe wird von dem Vergleicher 240 mit dem Schwellwert S verglichen, der abhängig von verschiedenen Betriebskenngrößen von der Schwellwertvorgabe 250 vorgebbar ist.

Erkennt die Abfrage 240, dass das Signal MH in einem vorgegebenen Bereich liegt, so wird das Signal als zulässig erkannt und von der Steuerung 172 weiterverarbeitet. Alternativ kann auch vorgesehen sein, dass das Signal MH dahin überprüft wird, ob ein betriebspunktabhängiger Schwellwert überschritten wird. So kann ebenfalls auf Fehler erkannt werden, wenn keine Pulsationen auftreten, was ebenfalls auf einen Defekt hinweist. Besonders vorteilhaft ist es, wenn nur dann auf ein zulässiges Signal erkannt wird, wenn das Signal MH, das die Pulsationen charakterisiert, kleiner als ein Schwellwert S1 und größer als ein Schwellwert S2 ist, d. h. das Signal innerhalb eines Fensters liegt.

Ein Fehler, der im Bereich der Zuleitungen zu dem Differenzdrucksensor auftreten kann, ist dadurch gegeben, dass sich in den Zuleitungen Partikel ablagern. Durch diese Versottung werden die Drucksignale verfälscht und stören die Beladungserkennung und damit die Steuerung des Regenerationsvorganges. Dies kann zu höheren Emissionen, zum Versagen des gesamten Abgasnachbehandlungssystems sowie zum Gesamtausfall des Fahrzeugs führen.

Durch eine frühzeitige Erkennung der Versottung während des Motorbetriebs kann in geeigneter Weise auf ein fehlerhaftes Drucksignal reagiert werden und entsprechende Maßnahmen eingeleitet werden. Insbesondere kann vorgesehen sein, dass der Beladungszustand durch andere Verfahren, beispielsweise durch eine Simulation berechnet wird.

Erfindungsgemäß wurde erkannt, dass sich der Differenzdruck und der Abgasvolumenstrom bei Änderungen der Betriebszustände, wie beispielsweise bei einem Lastwechsel und/oder einer Motordrehzahländerung, in ähnlicher Weise ändern. Weichen das zeitliche Verhalten des Differenzdruckes und des Abgasvolumenstroms deutlich voneinander ab, so ist von einem Fehler im System auszugehen. Erfindungsgemäß werden die Signale differenziert und dadurch das dynamische Verhalten erfasst und miteinander verglichen.

Ein Fehler wird erfindungsgemäß dann erkannt, wenn der Volumenstromgradient ÄM kleiner als ein negativer Gradientengrenzwert SWMNeg ist, der Druckgradient ÄDP aber größer als der zugehörige Minimalwert SWDPNeg ist. Ebenso wird ein Fehler erkannt, wenn der Volumenstromgradient ÄM größer als ein positiver Gradient SWMPos ist und der Druckgradient ÄDP kleiner als der vorgegebene Wert SWDPPos ist. In diesen Fällen wird nach zwischengeschalteter Entprellung und unter der Voraussetzung, dass keiner der für die Ermittlung der beiden Eingangssignale notwendigen Sensoren ein Defekt aufweist, ein Fehler auf Versottung und fehlerhafte Dynamik erkannt.

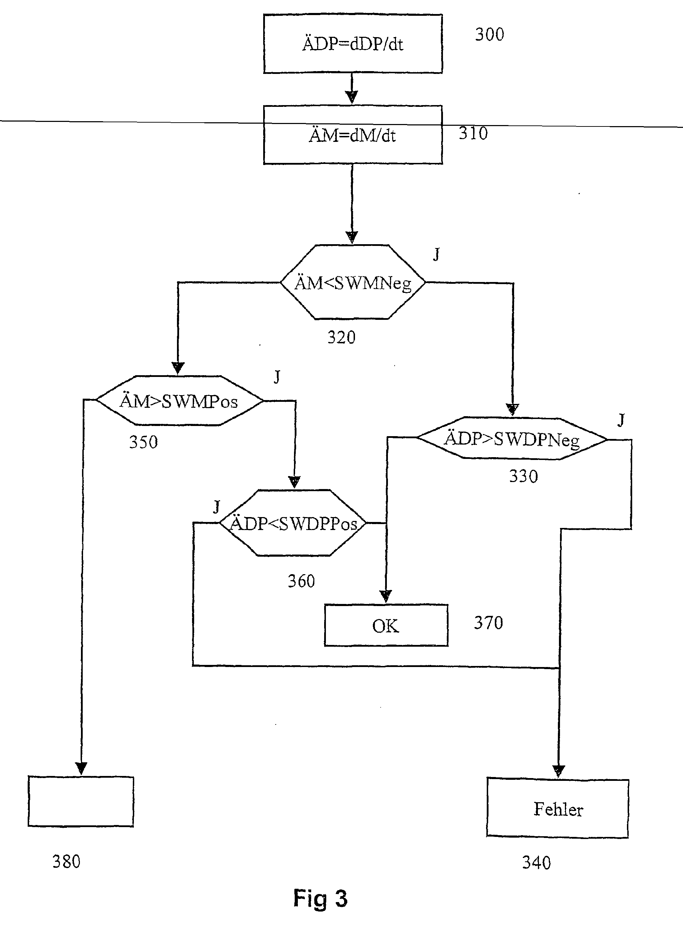

Eine entsprechende Vorgehensweise ist in Figur 3 dargestellt. In einem ersten Schritt 300 wird der Gradient ÄDP des Differenzdrucks, der der zeitlichen Ableitung des Differenzdruckes DP entspricht, bestimmt. Anschließend in Schritt 310 wird die Änderung ÄM des Abgasmassenstroms ebenfalls durch Differenzieren des Abgasvolumenmassenstromes M bestimmt. Der Abgasmassenstrom liegt in Steuereinheit als Größe vor, bzw. kann aus anderen Betriebskenngrößen berechnet werden.

Eine erste Abfrage 320 überprüft, ob die Änderung des Abgasmassenstroms ÄM kleiner als der negative Schwellwert SWMNeg ist. Ist dies der Fall, überprüft die Abfrage 330, ob die Änderung des Differenzdruckes ÄDP größer als ein negativer Minimalwert SWDPNeg ist. Ist dies ebenfalls der Fall, so wird in Schritt 340 auf Fehler erkannt. In diesem Fall wird auf Fehler erkannt, wenn die Druckdifferenz beimstarken Abfall des Abgasmassenstroms zu wenig abnimmt.

Erkennt die Abfrage 320, dass die Änderung des Massenstroms nicht kleiner als der Schwellwert SWMNeg ist, so überprüft die Abfrage 350, ob die Änderung des Massenstromes größer als ein positiver Schwellenwert SWMPos ist. Ist dies der Fall, so überprüft die Abfrage 360, ob die Änderung des Differenzdruckes ÄDP kleiner als ein positiver Schwellwert SWDPPos ist. Ist dies der Fall, so wird ebenfalls in Schritt 340 auf Fehler erkannt.

Die Abfragen 350 und 360 erkennen auf Fehler, wenn sich die Druckdifferenz zu gering ändert, wenn der Abgasmassenstrom stark ansteigt.

Andernfalls wird in Schritt 370 auf fehlerfreien Zustand erkannt bzw. die in den übrigen Figuren dargestellten Verfahren abgearbeitet. Bereits erkannte Fehler werden erst dann gelöscht, wenn bei erneutem Test auf Fehlerfreiheit erkannt wurde.

Bei einer Ausgestaltung können die Abfragen 320 und 350 auch in vertauschter Folge abgearbeitet werden. Es ist unerheblich in welcher Reihenfolge die Schwellenwerte SWMPos und SWMNeg abgefragt werden.

Mit der im folgenden beschriebenen Ausführungsform können verschiedene Fehler im Bereich der Zuleitung 115a bzw. 115b erkannt werden. Üblicherweise sind diese Zuleitungen als Schlauchverbindungen realisiert. Diese können sich im realen Betrieb lösen, was zu einem fehlerhaften Drucksignal führt. Insbesondere wenn die Zuleitung 115a stromaufwärts vor dem Partikelfilter abfällt, ist keine Beladungserkennung mehr möglich. Durch die thermische und mechanische Beanspruchung der Zuleitung ist auch eine Verschmelzung oder ein Knicken der Schläuche möglich.

Insbesondere mit Blick auf die hohen Anforderungen an die Betriebssicherheit und/oder gesetzlichen Bestimmungen ist es nicht ausreichend, die Zuleitungen ausschließlich im Rahmen der Wartung zu prüfen. Mit der erfindungsgemäßen Vorgehensweise ist es möglich, während des Motorbetriebs die Zuleitungen zu prüfen und die Aussagefähigkeit des Drucksignals zu bestätigen. Besonders vorteilhaft ist es, das keine zusätzlichen Sensoren erforderlich sind, da die Daten in der Steuereinheit 170 bereits vorliegen.

Mit der erfindungsgemäßen Vorgehensweise werden bevorzugt zwei kritische Fehlerfälle erkannt. Zum einen wird überprüft, ob die Zuleitung 115a intakt und die Verbindung zwischen dem Sensor 192 und der Abgasleitung nicht abgefallen ist. Zum anderen wird überprüft, ob die Verbindung 115b nicht verstopft, abgeknickt oder bei einer Verwendung eines Kunststoffschlauchs dieser aufgrund der hohen Temperatur verschmolzen ist. In diesem Fall baut sich der Druck hier zwar auf, wird aber bei einem entsprechenden Druckabfall im Abgassystem nicht oder nur verzögert abgebaut. Diese beiden Fehler beeinflussen die Funktionsfähigkeit der Beladungserkennung und damit der Steuerung des Regenerationsvorganges des Partikelfilters.

Der Abfall des Schlauches der Zuleitung 115a führt zu einem erheblichen Druckabfall am Sensor 192. Erfindungsgemäß wird ein entsprechender Fehler erkannt, wenn der Differenzdruck für eine längere Zeitdauer kleiner als ein Mindestwert DPMIN ist. Liegt nur eine kurzzeitige Unterscheidung des Mindestwertes vor, wird auf Fehler erkannt, wenn der Volumenstromanstieg zugleich einen Grenzwert überschreitet. D. h. wenn bei einer starken Zunahme des Volumenstroms der Differenzdruck den Mindestwert unterschreitet. In diesem Fall kann davon ausgegangen werden, dass der Druckausgleich in der Leitung 115b gestört ist.

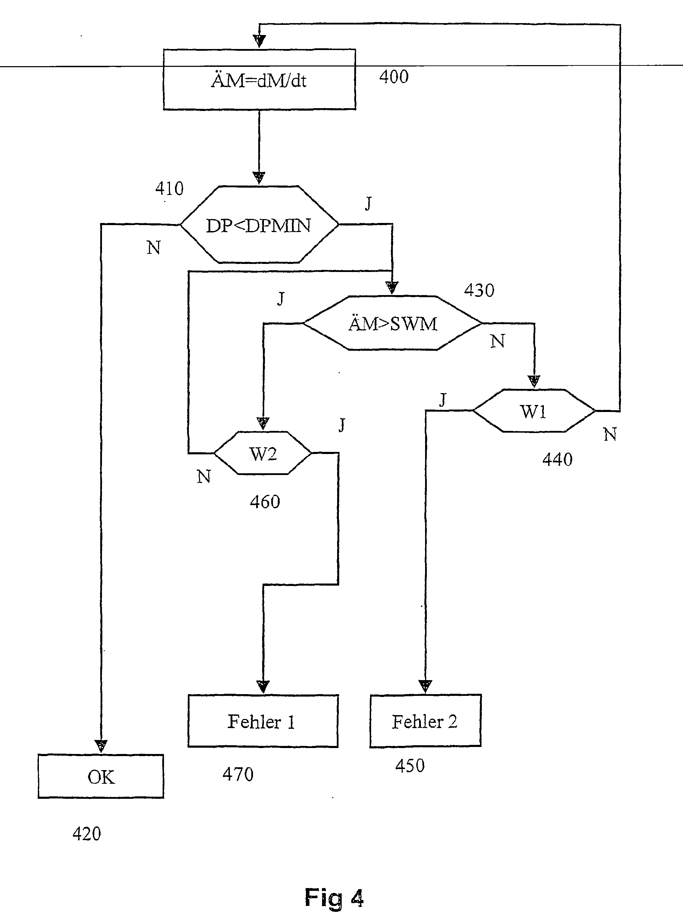

Eine entsprechende Vorgehensweise ist in Figur 4 dargestellt. In einem ersten Schritt 400 wird die Änderung ÄM des Volumenmassenstromes durch Differenzieren berechnet. Die sich anschließende Abfrage 410 überprüft, ob der Differenzdruck DP kleiner als ein Mindestwert DPMIN ist. Ist dies nicht der Fall, so wird in Schritt 420 auf Fehlerfreiheit des Systems erkannt. Zusätzlich kann vorgesehen sein, dass im Schritt 420 Verfahren zur Fehlerentprellung durchgeführt werden.

Erkennt die Abfrage 410, dass der Differenzdruck kleiner als der Mindestwert DPMIN ist, überprüft die Abfrage 430, ob die Änderung ÄM des Volumenstroms größer als ein Schwellwert SWM ist. Ist dies nicht der Fall, so überprüft die Abfrage 440, ob eine Wartezeit W1 abgelaufen ist. Ist dies der Fall, so wird in Schritt 450 auf Fehler 2 erkannt. Insbesondere wird erkannt, dass die Zuleitung 115a fehlerhaft ist. Beispielsweise liegt ein solcher Fehler vor, wenn die Verbindungsleitung sich vom Sensor bzw. von der Abgasleitung gelöst hat. Dieser Fehler wird erkannt, wenn über einen längeren Zeitraum W1 ein zu kleiner Differenzdruck anliegt.

Erkennt die Abfrage 440, dass die Wartezeit noch nicht abgelaufen ist, so folgt erneut Schritt 400.

Erkennt die Abfrage 430, dass ein starker Abgasmassenstromanstieg aufgetreten ist, so überprüft eine Abfrage 460, ob eine weitere Wartezeit W2 abgelaufen ist. Ist dies nicht der Fall, so erfolgt erneut Schritt 430. Ist die Wartezeit abgelaufen, so wird in Schritt 470 ein weiterer Fehler 1 erkannt. Dieser Fehler 1 zeigt an, dass die Leitung 115a verstopft ist. Dieser Fehler wird erkannt, wenn ein starker Abgasmassenstromanstieg die Ursache für den zu kleinen Differenzdruck DP ist. Vorzugsweise ist die Wartezeit W2 deutlich kleiner als die Wartezeit w1.

## Patentansprüche

1. Verfahren zur Fehlerdiagnose, bei welchem der Druck am Eingang und Ausgang und/oder die Druckdifferenz zwischen Eingang und Ausgang eines Abgasnachbehandlungssystems (115) bewertet wird, **dadurch gekennzeichnet, dass**, ausgehend von auftretenden Schwingungen im Drucksignal (PR) und/oder ausgehend vom zeitlichen verhalten des Drucksignals (PR) un einer den Abgasmassenstrom oder Abgasvolumenstrom charakterisierenden Größe (M) in einer Steuereinheit (170) auf Fehler im Abgasnachbehandlungssystem (115) und/oder in einer Zuleitung (115a, 115b) zu einem Drucksensor (192) erkannt wird.

2. Verfahren nach Anspruch 1, **dadurch gekennzeichnet, dass** ein Fehler erkannt wird, wenn eine Größe (MH), welche die Schwingungsamplitude des Drucksignals (PR) charakterisiert, außerhalb eines zulässigen Bereichs liegt.

3. Verfahren nach Anspruch 2, **dadurch gekennzeichnet, dass** ein Fehler erkannt wird, wenn die Größe (MH), welche die Schwingungsamplitude des Drucksignals (PR) charakterisiert, kleiner als ein Schwellenwert (S) ist.

4. Verfahren nach Anspruch 3, **dadurch gekennzeichnet, dass** der Schwellenwert (S) abhängig vom Betriebszustand der Brennkraftmaschine (100) und/oder des Abgasnachbehandlungssystems (115) vorgebbar ist.

5. Verfahren nach Anspruch 4, **dadurch gekennzeichnet, dass** der Schwellenwert (S) abhängig von der Drehzahl (N) und/oder der eingespritzten Kraftstoffmenge (QK) vorgebbar ist.

6. Verfahren nach einem der vorhergehenden Ansprüche, **dadurch gekennzeichnet, dass** die Größe (MH) ausgehend von der Differenz zwischen dem Drucksignal (PR) und dem gemittelten Drucksignal (PR) bestimmt wird.

7. Verfahren nach einem der vorhergehenden Ansprüche, **dadurch gekennzeichnet, dass** der gemittelte Betrag der Differenz zwischen dem Drucksignal (PR) und dem gemittelten Drucksignal (PR) als Größe (MH) verwendet wird.

8. Verfahren nach einem der vorhergehenden Ansprüche, **dadurch gekennzeichnet, dass** ein Fehler erkannt wird, wenn die Änderung des Drucksignals (PR) und eine Änderung (ÄM) der Größe (M) des Abgasmassenstroms oder des Abgasvolumenstroms unplausibel sind.

9. Verfahren nach Anspruch 8, **dadurch gekennzeichnet, dass** ein Fehler erkannt wird, wenn bei einer Änderung (ÄM) der den Abgasmassenstrom oder den Abgasvolumenstrom charakterisierenden Größe (M) in Richtung eines Anstiegs das Drucksignal (PR) sich zu wenig ändert, insbesondere weniger als ein Schwellenwert (SWDPPos) ansteigt.

10. Verfahren nach Anspruch 8, **dadurch gekennzeichnet, dass** ein Fehler erkannt wird, wenn bei einer Änderung (ÄM) der den Abgasmassenstrom oder den Abgasvolumenstrom charakterisierenden Größe (M) in Richtung eines Abfalls das Drucksignal (PR) sich zu wenig ändert, insbesondere weniger als ein Schwellenwert (SWDPNeg) abfällt.

11. Verfahren nach Anspruch 1 oder 8, **dadurch gekennzeichnet, dass** ein Fehler erkannt wird, wenn über einen ersten Zeitraum (W1) ein zu kleines Drucksignal (PR) anliegt.

12. Verfahren nach Anspruch 1 oder 8, **dadurch gekennzeichnet, dass** ein Fehler erkannt wird, wenn bei einem starken Abfall der den Abgasmassenstrom oder den Abgasvolumenstrom charakterisierenden Größe (M) für einen zweiten Zeitraum (W2) ein zu kleines Drucksignal (PR) anliegt.

13. Vorrichtung zur Fehlerdiagnose, bei welcher eine Bewertung des Drucks am Eingang und Ausgang und/oder der Druckdifferenz zwischen Eingang und Ausgang eines Abgasnachbehandlungssystems (115) vorgesehen ist, **dadurch gekennzeichnet, dass** eine Steuereinheit (170) vorgesehen ist, die, ausgehend von auftretenden Schwingungen im Drucksignal (PR) und/oder ausgehend vom zeitlichen Verhalten des Drucksignals (PR) und einer den Abgasmassenstrom oder Abgasvolumenstrom charakterisierenden Größe (M) auf Fehler im Abgasnachbehandlungssystem (115) und/oder in einer Zuleitung (115a, 115b) zu einem Drucksensor (192) erkennt.

## Claims

1. Method for fault diagnosis, in which the pressure at the entry and exit and/or the pressure difference between entry and exit of an exhaust-gas after treatment system (115) is evaluated, **characterized in that** a control unit (170) detects faults in the exhaust-gas aftertreatment system (115) and/or in a feed line (115a, 115b) to a pressure sensor (192) on the basis of the occurrence of oscillations in the pressure signal (PR) and/or on the basis of the time-related behaviour of the pressure signal (PR) and a variable (M) which characterizes the exhaust-gas mass flow or exhaust-gas volumetric flow.

2. Method according to Claim 1, **characterized in that** a fault is detected if a variable (MH), which characterizes the oscillation amplitude of the pressure signal (PR), is outside a permissible range.

3. Method according to Claim 2, **characterized in that** a fault is detected if the variable (MH), which characterizes the oscillation amplitude of the pressure signal (PR), is lower than a threshold value (S).

4. Method according to Claim 3, **characterized in that** the threshold value (S) can be predetermined as a function of the operating state of the internal combustion engine (100) and/or of the exhaust-gas aftertreatment system (115).

5. Method according to Claim 4, **characterized in that** the threshold value (S) can be predetermined as a function of the engine speed (N) and/or the injected fuel quantity (QK).

6. Method according to one of the preceding claims, **characterized in that** the variable (MH) is determined on the basis of the difference between the pressure signal (PR) and the mean pressure signal (PR).

7. Method according to one of the preceding claims, **characterized in that** the mean absolute value of the difference between the pressure signal (PR) and the mean pressure signal (PR) is used as the variable (MH).

8. Method according to one of the preceding claims, **characterized in that** a fault is detected if the change in the pressure signal (PR) and a change (ÄM) in the variable (M) for the exhaust-gas mass flow or the exhaust-gas volumetric flow are implausible.

9. Method according to Claim 8, **characterized in that** a fault is detected if the pressure signal (PR) does not change sufficiently, in particular rises by less than a threshold value (SWDPPos), in the event of a change (ÄM) in the variable (M), which characterizes the exhaust-gas mass flow or the exhaust-gas volumetric flow, in the direction of an increase.

10. Method according to Claim 8, **characterized in that** a fault is detected if the pressure signal (PR) does not change sufficiently, in particular drops by less than a threshold value (SWDPNeg), in the event of a change (AM) in the variable (M), which characterizes the exhaust-gas mass flow or the exhaust-gas volumetric flow, in the direction of a decrease.

11. Method according to Claim 1 or 8, **characterized in that** a fault is detected if a pressure signal (PR) that is too low is present over a first period of time (W1).

12. Method according to Claim 1 or 8, **characterized in that** a fault is detected if a pressure signal (PR) which is too low is present for a second period of time (W2) in the event of a strong drop in the variable (M) which characterizes the exhaust-gas mass flow or the exhaust-gas volumetric flow.

13. Device for fault diagnosis, in which the pressure at the entry and exit and/or the pressure difference between the entry and exit of an exhaust-gas aftertreatment system (115) is evaluated, **characterized in that** there is a control unit (170) which, working on the basis of the occurrence of oscillations in the pressure signal (PR) and/or on the basis of the time-based behaviour of the pressure signal (PR) and a variable (M) which characterizes the exhaust-gas mass flow or exhaust-gas volumetric flow, detects faults in the exhaust-gas aftertreatment system (115) and/or in a feed line (115a, 115b) to a pressure sensor (192).

## Revendications

1. Procédé pour diagnostiquer un défaut, selon lequel on évalue la pression à l'entrée et à la sortie et/ou la différence de pression entre l'entrée et la sortie d'un système de post-traitement de gaz d'échappement (115),
**caractérisé en ce qu'**
on détecte dans une unité de commande (170) des défauts dans le système de post-traitement de gaz d'échappement (115) et/ou dans une conduite d'alimentation (115a, 115b) vers un capteur de pression (192), à partir des oscillations produites dans le signal de pression (PR) et/ou à partir du comportement temporel du signal de pression (PR) et d'une grandeur (M) caractérisant le courant massique de gaz d'échappement ou le courant volumique de gaz d'échappement.

2. Procédé selon la revendication 1,
**caractérisé en ce qu'**
on détecte un défaut lorsqu'une grandeur (MH), qui caractérise l'amplitude d'oscillation du signal de pression (PR), se situe hors d'une plage admissible.

3. Procédé selon la revendication 2,
**caractérisé en ce qu'**
on détecte un défaut, lorsque la grandeur (MH), qui caractérise l'amplitude d'oscillation du signal de pression (PR), est inférieure à une valeur de seuil (S).

4. Procédé selon la revendication 3,
**caractérisé en ce que**
la valeur de seuil (S) peut être prédéterminée en fonction de l'état de marche du moteur à combustion interne (100) et/ou du système de post-traitement de gaz d'échappement (115).

5. Procédé selon la revendication 4,
**caractérisé en ce que**
la valeur de seuil (S) peut être prédéterminée en fonction du régime (N) et/ou de la quantité de carburant injectée (QK).

6. Procédé selon l'une quelconque des revendications précédentes,
**caractérisé en ce qu'**
on détermine la grandeur (MH) à partir de la différence entre le signal de pression (PR) et le signal de pression moyen (PR).

7. Procédé selon l'une quelconque des revendications précédentes,
**caractérisé en ce qu'**
on utilise comme grandeur (MH) le montant moyen de la différence entre le signal de pression (PR) et le signal de pression moyen (PR).

8. Procédé selon l'une quelconque des revendications précédentes,
**caractérisé en ce qu'**
on détecte un défaut, lorsque la variation du signal de pression (PR) et une variation (ÄM) de la grandeur (M) du courant massique de gaz d'échappement ou du courant volumique de gaz d'échappement ne sont pas plausibles.

9. Procédé selon la revendication 8,
**caractérisé en ce qu'**
on détecte un défaut lorsque, pour une variation (ÄM) de la grandeur (M) caractérisant le courant massique de gaz d'échappement ou le courant volumique de gaz d'échappement dans le sens d'une hausse, le signal de pression (PR) varie trop peu, en particulier augmente moins qu'une valeur de seuil (SWDPPos).

10. Procédé selon la revendication 8,
**caractérisé en ce qu'**
on détecte un défaut lorsque, pour une variation (ÄM) de la grandeur (M) caractérisant le courant massique de gaz d'échappement ou le courant volumique de gaz d'échappement dans le sens d'une baisse, le signal de pression (PR) varie trop peu, en particulier diminue moins qu'une valeur de seuil (SWDPNeg).

11. Procédé selon la revendication 1 ou 8,
**caractérisé en ce qu'**
on détecte un défaut lorsqu'un signal de pression (PR) est trop faible pendant un premier laps de temps (W1).

12. Procédé selon la revendication 1 ou 8,
**caractérisé en ce qu'**
on détecte un défaut lorsque, pour une forte baisse de la grandeur (M) caractérisant le courant massique de gaz d'échappement ou le courant volumique de gaz d'échappement, un signal de pression (PR) est trop faible pendant un deuxième laps de temps (W2).

13. Dispositif pour diagnostiquer un défaut, dans lequel il est prévu une évaluation de la pression à l'entrée et à la sortie et/ou de la différence de pression entre l'entrée et la sortie d'un système de post-traitement de gaz d'échappement (115),
**caractérisé en ce qu'**
une unité de commande (170), détecte des défauts dans le système de post-traitement de gaz d'échappement (115) et/ou dans une conduite d'alimentation (115a, 115b) vers un capteur de pression (192), à partir des oscillations produites dans le signal de pression (PR) et/ou à partir du comportement temporel du signal de pression (PR) et d'une grandeur (M) caractérisant le courant massique de gaz d'échappement ou le courant volumique de gaz d'échappement.
